# EUROPEAN PATENT APPLICATION

(11) **EP 4 679 693 A1**
(43) Date of publication of application: **14.01.2026**
(21) Application number: 25188005.0
(22) Date of filing: 08.07.2025
(51) Int. Cl.: H02M 1/00, H02M 1/12, H02M 1/32, H02M 7/493

(54) **A METHOD FOR REDUCING A CIRCULATING CURRENT IN A POWER CONVERTER WITH TWO POWER CONVERTER UNITS ARRANGED IN PARALLEL**

(30) Priority: 12.07.2024 GB 202410154
(71) Applicant: Rolls-Royce Deutschland Ltd & Co KG, 15827 Blankenfelde-Mahlow (DE)
(72) Inventor: GAJANAYAKE, Chandana, 15827 Blankenfelde-Mahlow (DE); HO, Anh Vu, 15828 Blankenfelde-Mahlow (DE); SASONGKO, Firman, 15827 Blankenfelde-Mahlow (DE); WANG, Shuai, 15827 Blankenfelde-Mahlow (DE)

(57) **Abstract**

A method for reducing a circulating current in a power converter (100) that has a first power converter unit (10) and a second power converter unit (20) arranged in parallel. Each power converter unit (10, 20) has at least one commutation cell (61-63, 64-66) with a top switching unit (S11, S13, S15, S21, S23, S25) and a bottom switching unit (S12, S14, S16, S22, S24, S26) connected as a half bridge circuit and configured to receive a DC input voltage and provide a single phase current (I_{A1}, I_{A2}). Each phase current (I_{A}, I_{B}, I_{C}) provided by the power converter (100) is the sum of a respective first phase current (I_{A1}) of a commutation cell (61) of the first power converter unit (10) and a respective second phase current (I_{A2}) of a commutation cell (64) of the second power converter unit (20). The method involves: for each phase current (I_{A}, I_{B}, I_{C}) provided by the power converter (100): determining (801) a characteristic frequency in the phase current (I_{A1}, I_{A2}, I_{A}), the characteristic frequency being a switching frequency of the switching units (S11, S12, S21, S22) of the commutation cells (61, 64) or related to that frequency; determining (802) the magnitude of the characteristic frequency; comparing (803) the magnitude of the characteristic frequency with a predetermined magnitude; and, if the magnitude is larger than the predetermined magnitude, adding or reducing (804) in steps a switching delay to the top or bottom switching unit (S11, S12) of a commutation cell (61) of the first power converter unit (10) until the magnitude of the characteristic frequency is equal to or below the predetermined magnitude, the delay being added or reduced to the top or bottom switching unit (S11, S12) of that commutation cell (61) of the first power converter unit (10) that is involved with providing the first phase current (I_{A1}) for the considered phase current (I_{A}).

## Description

### Field

The present disclosure relates to a method for reducing a circulating current in a power converter with two power converter units arranged in parallel. Another aspect relates to a method for short circuit detection in a power converter. Still other aspects relate to corresponding power converters.

### Background

In next generation of aircrafts with more electric and hybrid propulsion systems, power electronics converters play a critical role. Power electronics converter such as inverters, rectifiers, and DC/DC converters are required to interface with electrical propulsion motors, turbo generators, fuel cell and battery energy storage systems. High performance power converter designs are always an attractive topic for different applications including aerospace, automotive, and other industrial applications.

To improve power density there is a trend to move away from traditional power module-based power converter designs to power converter designs based on surface mounted device (SMD) type power devices which are mounted on a printed circuit board (PCB), wherein multiple power devices are connected in parallel to meet the power/current requirements. In particular, parallel power converters may be implemented. However, a mismatch in switching actions between the parallel power converters is known to create short circuits or circulating currents that can lead to poor performance of the whole system. To reduce the circulating current, AC filter inductors could be added which, however, increase weight and bulkiness and may not be an acceptable solution for weight-critical applications like aerospace.

There is a need to provide for a method that reduces circulating currents in a power converter that comprises two power converter units arranged in parallel, and/or to detect a short-circuit in a power converter that comprises two power converter units arranged in parallel.

### Summary

In a first aspect a method for reducing a circulating current in a power converter is provided. The method is implemented in a power converter that comprises a first power converter unit and a second power converter unit arranged in parallel, wherein each power converter unit comprises at least one commutation cell with a top switching unit and a bottom switching unit connected as a half bridge circuit and configured to receive a DC input voltage and provide a single phase current. Each phase current provided by the power converter is the sum of a respective first phase current of a commutation cell of the first power converter unit and a respective second phase current of a commutation cell of the second power converter unit. In such environment, the method comprises that for each phase current provided by the power converter the following steps are carried out: determining a characteristic frequency in the phase current, wherein the characteristic frequency is a switching frequency of the switching units of the commutation cells or related to that frequency; determining the magnitude of the characteristic frequency; comparing the magnitude of the characteristic frequency with a predetermined magnitude, and if the magnitude is larger than the predetermined magnitude: adding or reducing in steps a switching delay to the top or bottom switching unit of a commutation cell of the first power converter unit until the magnitude of the characteristic frequency is equal to or below the predetermined magnitude, wherein the delay is added or reduced to the top or bottom switching unit of that commutation cell of the first power converter unit that is involved with providing the first phase current for the considered phase current.

Aspects of the invention are thus based on the idea to minimize the circulating current that is caused by a delay between the switching actions of the semiconductor switches of the first and second power converter unit that provide the same phase current. To this end, a switching delay is added to the top or bottom switching unit of a respective commutation cell of the first power converter. The added delay reduces the delay between the switching actions of the semiconductor switches of the first and second power converter unit and thus leads to a reduction of the circulation current. This is reflected in a reduction in the magnitude of a characteristic frequency in the phase current which is caused by a high-frequency circulating current (which is to be reduced). The method unfolds before the background that a high-frequency circulating current between two parallel power converter units of a power converter is caused by inter-circuit short circuits that happen at a fixed frequency which depends on the inverter switching frequency. Such fixed frequency is termed characteristic frequency within the meaning of the present disclosure. The high-frequency circulating current is superimposed on the phase current, but can be identified by its characteristic frequency which is the switching frequency of the semiconductor switches or related to the switching frequency. The characteristic frequency may be the dominant frequency of the high-frequency circulating current or a frequency side band.

Accordingly, the high-frequency circulating current contains a fixed/characteristic frequency that represents a specific signature of the high-frequency circulating current, wherein this signature appears in the output phase currents. Therefore, by measuring the phase currents, the high-frequency circulating current can be determined. The magnitude of the characteristic frequency corresponds to the strength of the high-frequency circulating current. Accordingly, when the overlapping time between the switching actions of the respective semiconductor switches is reduced by means of a delay provided to one of the switches, the magnitude of the characteristic frequency is also reduced. For this reason, the delay can be adjusted in a desired manner by watching the development of the magnitude of the characteristic frequency when the delay is changed.

A plurality of implementations is available of how the characteristic frequency may be determined based on the phase currents, both in the time domain and in the frequency domain.

In some embodiments, determining a characteristic frequency in the phase current comprises performing a transformation in the frequency domain, wherein determining the magnitude of the characteristic frequency takes place in the frequency domain. The transformation in the frequency domain may be a Fourier transformation (FFT), a wavelet transformation, or the like.

Accordingly, as the high-frequency circulating current is superimposed on the phase current, it may be determined from a frequency analysis of the phase current. In particular, as the high-frequency circulating current has a specific (the characteristic) frequency, it is located in the frequency domain at the characteristic frequency (and possibly harmonics thereof). By determining the magnitude of the characteristic frequency in the frequency domain, the strength of the high-frequency circulating current can be determined.

Further, it is pointed out that, as the high-frequency circulating current is superimposed on the phase current, the frequency analysis can be based on any representation of the phase current.

In some embodiments, a characteristic frequency in the phase current is determined by adding or subtracting the first and second phase currents from the two parallel power converter units. In particular, if the first and second phase currents are subtracted, the high-frequency circulating current has a strong dominance in the subtracted signal. A frequency analysis can then be based on the subtracted signal. However, in principle, for the frequency analysis it is not of relevance if the frequency analysis is done on the subtracted signal or the full phase current on which the high-frequency circulating current is superimposed.

In some embodiments, the step of determining the magnitude of the characteristic frequency comprises applying a characteristic frequency selector to the frequency domain signal. The characteristic frequency selector chooses the characteristic/dominant frequency within the frequency band and determines the amplitude/magnitude of the characteristic frequency.

In some embodiments, the output of the characteristic frequency selector is provided to a propagation delay compensating unit, wherein the propagation delay compensating unit compares the magnitude of the characteristic frequency with the predetermined magnitude and determines the switching delay (or gives this information to a controller who determines the switching delay).

In some embodiments, all switching units are operated by the same modulation signals that are provided by a single controller, wherein the single controller provides pulsed modulation signals with the switching delay to the gate driver which controls operation of the switching units of the considered commutation cell, and wherein the gate driver provides output switching signals with the switching delay to the switching unit. Accordingly, the gate driver receives the delayed signal from the single controller and provides a pulsed output signal to the semiconductor switch, wherein the pulsed output signal comprises the switching delay. By using a single controller for all switching units, asynchronous switching due to asynchronous PWM inputs can be avoided, thereby reducing the overlapping time between the switching actions of the respective semiconductor switches and, consequently, also reducing the high-frequency circulating current.

In some embodiments, the method of the present disclosure is implemented at a factory site to optimize the timing of the switching signals for the commutation cells. In such embodiments, a measured mismatch in propagation delay can be compensated by adding a calibration value to the switching signals of the power converter units.

In some embodiments, the method of the present disclosure is carried out permanently or in intervals during operation of the power converter. For example, a feed forward control is implemented where the compensation delay is updated as necessary from time to time based on changes in the system and operation.

In some embodiments, the method is carried out for three phases of a three phase alternating current, wherein each power converter unit comprises three commutation cells.

In some embodiments, the step of adding or reducing in steps the switching delay comprises: adding a switching delay to the considered switching unit; determining again the magnitude of the characteristic frequency; determining if the magnitude of the characteristic frequency has decreased; if so, add a further switching delay to the considered switching unit and repeat the adding of a further switching delay until the magnitude of the characteristic frequency does not decrease anymore; if not, reduce the switching delay by adding a negative switching delay; determine again the magnitude of the characteristic frequency; determine if the magnitude of the characteristic frequency has decreased; and if so, add a further negative switching delay to the considered switching unit and repeat the adding of a further negative switching delay until the magnitude of the characteristic frequency does not decrease any more.

Accordingly, the time delay is modified incrementally in one direction or the other. As the delay can be lagging or leading with respect to a time reference, a trial and error method is used to change the time delay in one direction or the other.

The delay is defined with respect to a time reference. The time reference may be the switching signal (such as a PWM signal) that is applied to the switching unit of the other power converter unit which provides for the same phase signal.

In some embodiments, after the switching delay to the top or bottom switching unit of the commutation cell of the first power converter has been changed to be equal to or below the predetermined magnitude, a switching delay is added add or reduced in steps to the other one of the top or bottom switching units of the commutation cell of the first power converter or to the top or bottom switching unit of the commutation cell of the second power converter until the magnitude of the characteristic frequency is equal to or below the predetermined magnitude for that top or bottom switching unit. In other words, when the delay compensation is no longer improving, the delay manipulation is shifted the other overlapping switching pair of the considered commutation cells by following the same process to identify the correct direction and compensate the delay.

In some embodiments, the step of comparing the magnitude of the characteristic frequency with a predetermined magnitude and of determining if the magnitude is larger than the predetermined magnitude further includes determining if the magnitude is larger than a second predetermined threshold magnitude, wherein, if this is the case, operation of the respective commutation cell is shut down. In these embodiments regards the case of an excessive amount of high-frequency short circuit current taking place between the first and second power converter units. In such case, it is necessary to shut down at least one of the power converter units.

In a second aspect a method is provided that allows a short-circuit detection in a power converter that comprises two power converter units arranged in parallel. The structure of the power converter is the same as discussed with respect to the first aspect. Also, the steps to determine a characteristic frequency in the phase current, to determine the magnitude of the characteristic frequency, and to compare the magnitude of the characteristic frequency with a predetermined magnitude are the same as per the first aspect. However, subsequently, if the magnitude is larger than the predetermined magnitude, the operation of at least one of the power converter units is shut down.

In this aspect a short-circuit/fault detection and a protection of the power converter are provided. The predetermined magnitude here indicates an excessive amount of high-frequency short circuit current that is happening between the two power converter units. This may lead to overheating and damaging the converters. In such condition, at least one of the power converter units is shut down.

In a third aspect a power converter is provided. The power converter comprises a first power converter unit and a second power converter unit arranged in parallel between a positive voltage rail and a negative voltage rail of a DC power bus. Each power converter unit comprises at least one commutation cell with a top switching unit and a bottom switching unit connected as a half bridge circuit and configured to receive a DC input voltage and provide a single phase current. The power converter further comprises gate drivers, wherein each gate driver is associated with one of the power converter units and configured to provide a pulsed output signal for controlling switching of the switching units of the respective power converter unit. The pulsed output signal has a switching frequency. It is provided that each phase current provided by the power converter is the sum of a respective first phase current of a commutation cell of the first power converter unit and a respective second phase current a commutation cell of the second power converter unit.

The power converter further comprises a delay compensating circuit. The delay compensating circuit comprises means to determine, for each of the phase currents, a characteristic frequency in the phase current, wherein the characteristic frequency is a switching frequency or related to that frequency. The delay compensating circuit further comprises means to determine the magnitude of the characteristic frequency and means to compare the magnitude of the characteristic frequency with a predetermined magnitude, and determine if the magnitude is larger than a predetermined magnitude.

The power converter further comprises a single controller, "single" meaning that the same controller is used to provide (through respective gate drivers) control signals for all switching units of the power converter, thereby avoiding asynchronous switching due to asynchronous inputs. The single controller is configured to provide pulsed control signals to the gate drivers, wherein the gate drivers provide pulsed output signals to the switching units of the respective commutation cell based on the pulsed control signals received from the single controller. Accordingly, the single controller generates switching pulses for both power converter units.

The single controller is further configured to receive from the comparing means the information if the magnitude is larger than the predetermined magnitude. If so, a switching delay is added or reduced in steps to the pulsed control signals provided to the gate driver of that commutation cell of the first power converter unit that is involved with providing the first phase current for the considered phase current. Accordingly, such switching delay is present in the pulsed output signals of the gate driver and provided to the top or bottom switching unit of that commutation cell. The switching delay is added or reduced in steps until the magnitude of the characteristic frequency is equal to or below the predetermined magnitude.

Accordingly, the time delay is defined in the controller and included in the control signals from the controller to the gate driver, wherein the delay is maintained in the output signals provided by the gate driver to the respective switching unit. The delay is modified incrementally in one direction or the other until the delay compensation is no longer improving.

The mentioned means may comprise, for example, a processor for executing instructions and a storage medium which is coupled to the processor and in which instructions are stored which, when executed by the processor, cause the processor to implement the function performed by the respective means. In other words, the means are realised by software in combination with a processor that executes the software. The said means can each be realised by a separate processor with associated software and storage medium or the said means can be provided jointly by one or more processors.

The processor can be a digital signal processor (DSP) or reside in a Field Programmable Gate Array (FPGA) or an application specific integrated circuit (ASIC).

Some embodiments, the delay compensating circuit is integrated into the single controller. The single controller may be incorporated in a DSP or an FPGA.

In a fourth aspect a power converter is provided that provides for short-circuit protection by evaluating the magnitude of the characteristic frequency, wherein at least one of the gate drivers for the first and second power converter units is shut down (and, accordingly, also the respective power converter unit is shut down) if the magnitude of the characteristic frequency is above a predetermined magnitude.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

The invention will be explained in more detail on the basis of exemplary embodiments with reference to the accompanying drawings in which:
FIG. 1 shows an embodiment of a power converter having three power converter units arranged in parallel and providing a three phase alternating current, wherein each power converter unit is associated with a gate driver, and wherein the gate drivers are controlled by a controller;
FIG. 2 shows an embodiment of a power converter having two power converter units arranged in parallel and providing a three phase alternating current, wherein each power converter unit comprises three commutation cells, and wherein each commutation cell comprises a top switching unit and a bottom switching unit;
FIG. 3 shows the power converter of FIG. 2, wherein additionally circulating currents are indicated which are present between switching units of the two power converter units which provide the same phase current;
FIG. 4 is a schematic view of the formation of a switching delay between switching units of different power converter units;
FIG. 5 shows the power converter of FIG. 2, wherein additionally a circulating current is indicated which is present between a top switching unit for phase A of a commutation cell of the first power converter unit and a bottom switching unit for phase A of the corresponding commutation cell of the second power converter unit;
FIG. 6 shows the power converter of FIG. 2, wherein additionally a circulating current is indicated which is present between top switching unit for phase A of a commutation cell of the second power converter unit and a bottom switching unit for phase A of the corresponding commutation cell of the first power converter unit;
FIG. 7 is a schematic depiction of a power converter having first and second power converter units arranged in parallel, wherein a controller of the power converter is additionally depicted, wherein the controller receives delay information from a delay compensating circuit and provide switching delays to the gate drivers of the first and second power converter units to reduce circulating currents;
FIG. 8 is a flowchart of a general method for reducing a circulating current in a power converter that comprises two power converter units arranged in parallel;
FIG. 9 is a flowchart of a more detailed example method for reducing a circulating current in a power converter that comprises two power converter units arranged in parallel;
FIG. 10 is a flowchart of a method for short-circuited detection in a power converter that comprises two power converter units arranged in parallel; and
FIG. 11 shows a standard DC/AC converter topology.

### Detailed description

In the following a power system is described by way of example that comprises a power converter which is implemented as a DC/AC power inverter that changes a direct current to an alternating current. However, the principles of the present disclosure may similarly apply to other kinds of power converters.

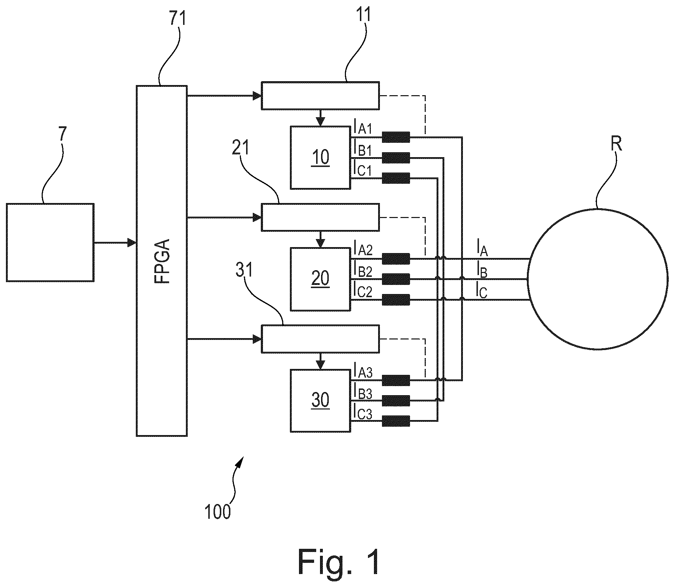

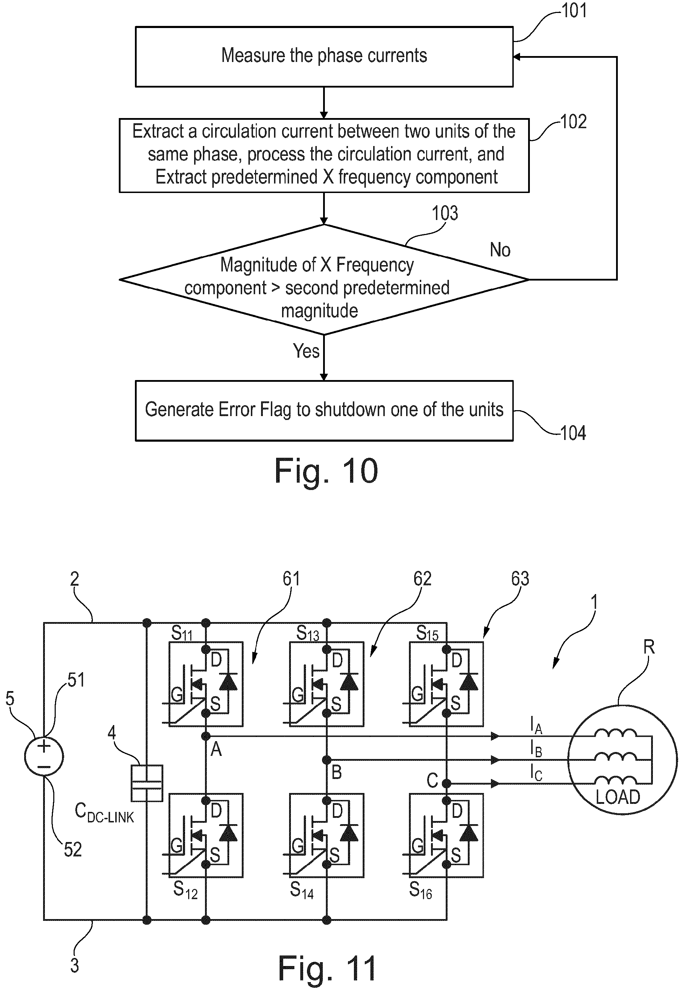

Before discussing embodiments of the present disclosure with respect to FIGS. 1 to 10, the background of the disclosure is discussed with respect to FIG. 11 to provide for a better understanding of the present disclosure.

FIG. 11 shows a DC power system that comprises a DC voltage source 5 (such as a DC battery, or a DC/DC converter or a rectifier) that has a positive terminal 51 and a negative terminal 52. Between the positive terminal 51 and the negative terminal 52 a DC battery voltage is present. A positive voltage rail 2 is connected to the positive terminal 51 and a negative voltage rail 3 is connected to the negative terminal 52. The positive voltage rail 2 and the negative voltage rail 3 form a high-voltage bus.

The system further comprises a power converter 1. The power converter 1 comprises six switching units S₁₁, S₁₂, S₁₃, S₁₄, S₁₅, S₁₆ which are arranged in three parallel legs or half bridge circuit 61, 62, 63, wherein each half bridge circuit 61, 62, 63 comprises a top (high side) switching unit S₁₁, S₁₃, S₁₅ connected to the positive voltage rail 2 and a bottom (low side) switching unit S₁₂, S₁₄, S₁₆ connected to the negative voltage rail 3. The respective top switching units S₁₁, S₁₃, S₁₅ and bottom switching units S₁₂, S₁₄, S₁₆ are connected as a half bridge circuit. Each of the bridge circuits 61, 62, 63 provides at a point A, B, C between the respective top and bottom switching units one phase current I_{A}, I_{B}, I_{C} of a three phase alternating current which is provided to a load R such as an electric propulsion motor.

Further, a filtering capacitor 4 which is typically referred to as DC link capacitor is arranged in parallel to the half bridge circuits 61, 62, 63.

Each half bridge circuit 61, 62, 63 together with the DC link capacitor 4 forms a commutation cell of the power converter 1 that provides for a one phase alternating current. Accordingly, the power converter 1 of FIG. 11 comprises three commutation cells. In the following, the reference signs 61, 62, 63 are used both to designate the half bridge circuits and the respective commutation cells.

The power converter 1 further comprises a gate driver (not shown) which provides a switching signal to the gates G of the switching units S₁₁, S₁₂, S₁₃, S₁₄, S₁₅, S₁₆, thereby controlling the switching of the switching units. The gate drive is an electronic circuit which acts as two-level switching voltage source.

The switching units S₁₁, S₁₂, S₁₃, S₁₄, S₁₅, S₁₆ may each comprise a single semiconductor switch as depicted in FIG. 11.

The semiconductor switches S₁₁, S₁₂, S₁₃, S₁₄, S₁₅, S₁₆ may each comprise an antiparallel diode D as depicted in FIG. 11. The antiparallel diodes D give current that flows in the opposite direction a path to flow.

Each of the semiconductor switches S₁₁, S₁₂, S₁₃, S₁₄, S₁₅, S₁₆ may a be Silicon or Silicon carbine based MOSFET or Gallium Nitride (GaN), having three terminals gate G, source S, and Drain D. In other embodiments, the semiconductor switches may be Insulated Gate Bipolar Transistors (IGBTs).

Accordingly, the DC/AC power converter 1 of FIG. 11 comprises three commutation cells (half bridge circuits) 61, 62, 63 arranged in parallel, wherein each commutation cell 61, 62, 63 provides for a single phase AC output and the complete converter provides for a three-phase AC output.

It is advantages to connect a plurality of such DC/AC converters in parallel and control them through a centralized controller. In such case, however, a circulating current may occur between two parallel converters that flows from one converter to the other or vice versa. Such circulating current is caused by an inter-circuit short circuit that occurs when there is a time lag in the switching of the respective semiconductor switches of the two converters. Such time lag is caused by component tolerances and nonlinearities that lead into overlapping ON states, as will be next discussed.

FIG. 1 depicts a power converter 100 which comprises three power converter units 10, 20, 30 which are arranged in parallel and which each provide a three-phase output. Each of the power converter units 10, 20, 30 comprises three commutation cells as discussed with respect to FIG. 11. More particularly, power converter unit 10 outputs first, second and third phase currents I_{A1}, I_{B1}, I_{C1}. Power converter unit 20 outputs first, second and third phase currents I_{A2}, I_{B2}, I_{C2}. Power converter unit 30 outputs first, second and third phase currents I_{A3}, I_{B3}, I_{C3}. The respective phase currents of the units 10, 20, 30 are combined to phase currents I_{A}, I_{B}, I_{C} that are provided to a load R such as a motor or a generator.

FIG. 1 further depicts gate drivers 11, 21, 31, wherein gate driver 11 is configured to drive the semiconductor switches of unit 10, gate driver 21 is configured to drive the semiconductor switches of unit 20, and gate driver 31 is configured to drive the semiconductor switches of unit 30.

The gate drivers 11, 21, 31 are controlled by a controller 7 which may be implemented by an FPGA 71. In particular, the controller 7 generates a modulated pulsed control signal that is provided to all gate drivers 11, 21, 31. The gate drivers 11, 21, 31 receive the pulsed control signal generated by the controller 7 and generate a pulsed output driver signal which is applied to the control terminal of the semiconductor switches of the commutation cells of the respective unit 10, 20, 30. By utilizing a single controller 7 asynchronous switching due to asynchronous inputs to the gate drivers 11, 21, 31 can be avoided.

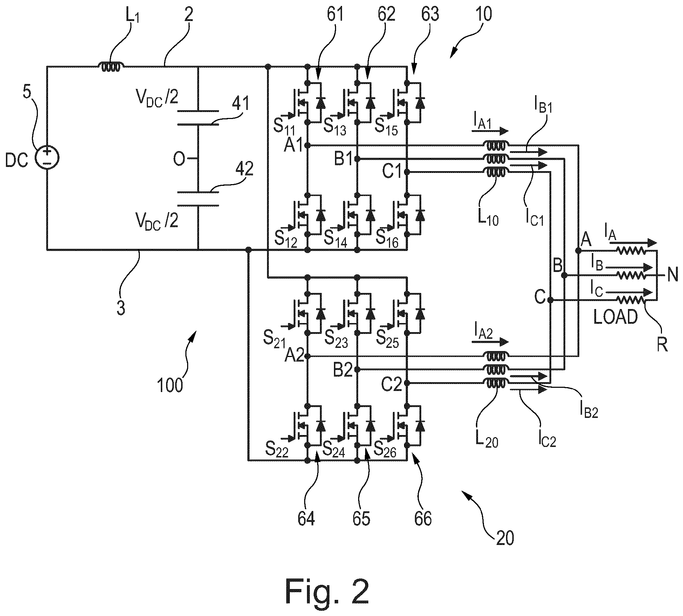

FIG. 2 shows a power converter 100 in principle similar to the one shown in FIG. 1, wherein the power converter 100 of FIG. 2 comprises two power converter units 10, 20 arranged in parallel between a positive voltage rail 2 and a negative voltage rail 3 connected to a DC source 5. The gate drivers and the controller of FIG. 1 are not shown but nevertheless present in the same manner. Accordingly, each of the converter units 10, 20 is associated with a separate gate driver, wherein both gate drivers receive their control signals from a controller such as controller 7 of FIG. 1.

Each power converter unit 10, 20 has the same configuration as the power converter of FIG. 11, and, accordingly, comprises three commutation cells 61, 62, 63 and 64, 65, 66, respectively. More particularly, converter unit 10 comprises switching units S₁₁, S₁₂, S₁₃, S₁₄, S₁₅, S₁₆, and converter unit 20 comprises switching units of the switching units S₂₁, S₂₂, S₂₃, S₂₄, S₂₅, S₂₆. The function is the same as discussed with respect to FIG. 11. Accordingly, power converter unit 10 outputs first, second and third phase currents I_{A1}, I_{B1}, I_{C1} and converter unit 20 outputs first, second and third phase currents I_{A2}, I_{B2}, I_{C2}, wherein these phase currents combine to phase currents I_{A}, I_{B}, I_{C} of the power converter 100.

In FIG. 2, other than in FIG. 11, the DC link capacitor is comprised of two separate capacitors 41, 42 arranged in series. However, this is not of relevance for the present disclosure and, alternatively, a single capacitor could be present. Also, it is possible to arrange several DC link capacitors in parallel.

FIG. 2 also indicates an inductance L1 in the positive voltage rail 2 and inductances L10 and L20 in the respective AC output lines.

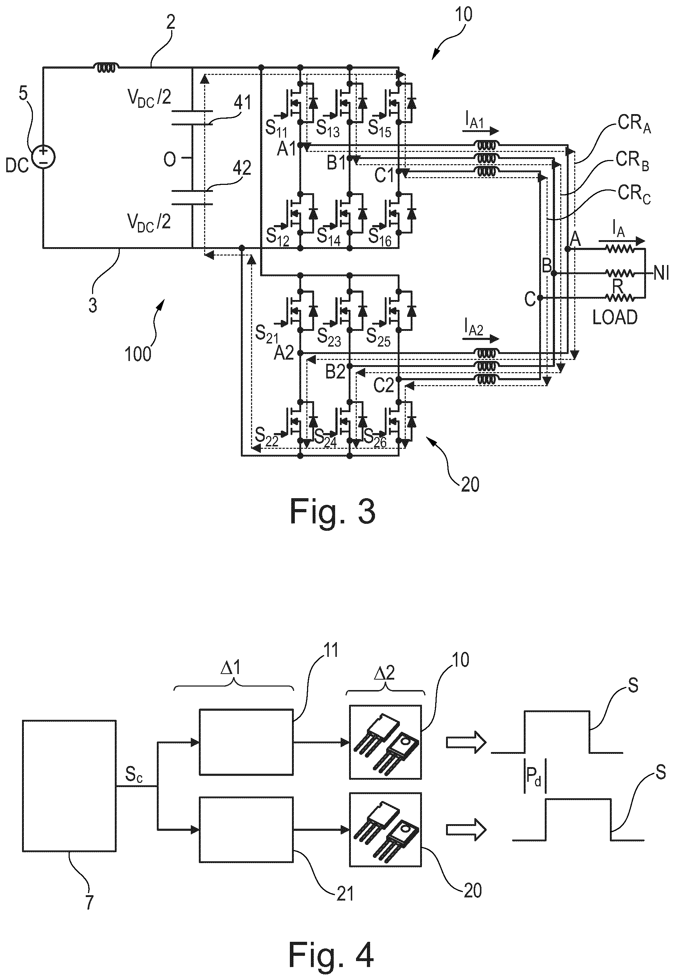

If the power converter comprises several parallel converter units such as in FIGS. 1 and 2, circulating currents may arise which are caused by asynchronous switching among the legs of the parallel connected converter units 10, 20, such asynchronous switching caused by overlapping time between the switching actions of the respective semiconductor switches. FIG. 3 shows the power converter of FIG. 2, wherein additionally such circulating currents CR_{A}, CR_{B}, CR_{C} are indicated.

FIG. 4 indicates how such circulating currents come into existence. Pulsed control signals S_{C} for the gate drivers 11, 12 are generated in controller 7. The pulsed control signals S_{C} are provided synchronously from controller 7 to the gate drivers 11, 21. However, there may be an unequal circuit propagation delay Δ1 due to different component tolerances and aging, and due to parasitic impedances with both the gate drivers 11, 21. Further, when the pulsed output signal S of the gate drivers 11, 21 is provided to the gates of the respective semiconductor switches, there may be a turn on delay Δ2 between the different semiconductor switches. These time delays Δ1, Δ2 sum up to a delay Pd between the pulsed output signal S of the gate drivers 11, 12 that are provided to the respective semiconductor switches.

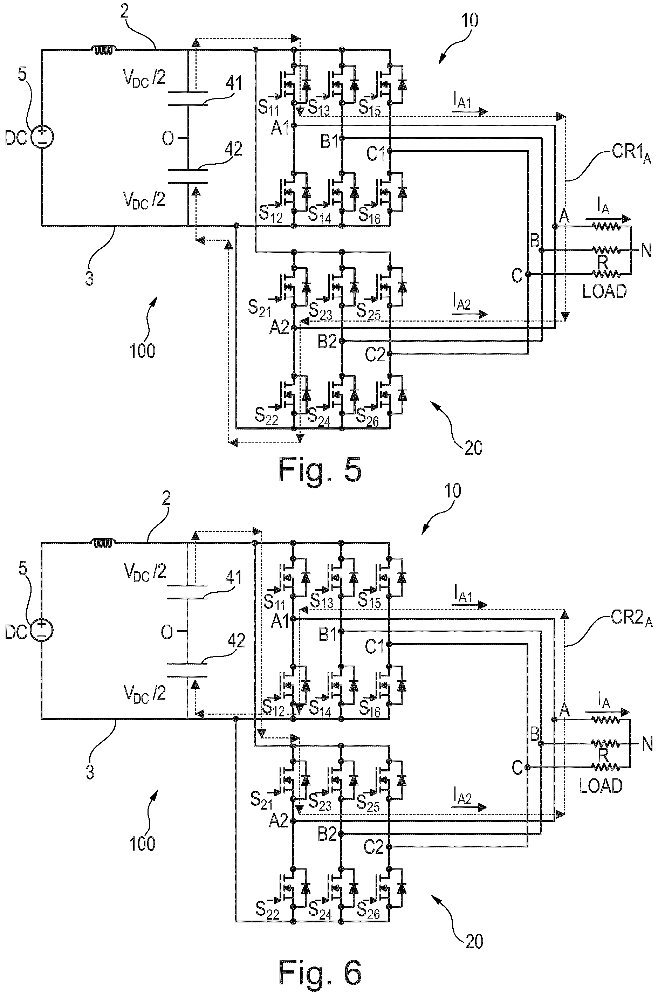

The time delay Pd leads to a high-frequency circulating current, wherein FIGS. 5 and 6 take a closer look at the circulating current CR_{A}, wherein similar remarks apply to the circulating currents CR_{B}, CR_{C}. More particularly, in FIGS. 5 and 6 illustrate two paths of the circulating current CR_{A} which is due to inter-circuit short circuit that may happen in phase A. For example, in FIG. 5, if the switches S11 and S21 are not switched at the same time or if the switches S12 and S22 are not switched at the same time, and if the dead time is too short, there may be a condition where a short interval period of short circuit on dc link capacitors 41, 42 is created. This is due to fact that a current path is created between S11 to S22 (FIG. 5) and S12 to S21 (FIG. 6) when they have overlapping ON states, with respective circulating currents CR1_{A} and CR2_{A}. The short circuit current depends on the amount of delay or switching overlap happening between these combinations and the total impedance in the corresponding short circuit path.

Moreover, due to component tolerances, aging, etc., these delays are not necessarily the same and may require independent adjustment. To reduce the circulating current due to inter-circuit short circuit the overlapping time need to be minimized. One solution to this issue would be to make sure that the dead time is long enough to account for the delay mismatch between the inverters to avoid the overlapping time. However, long dead time will cause voltage and current distortion on the AC outputs and is not desirable.

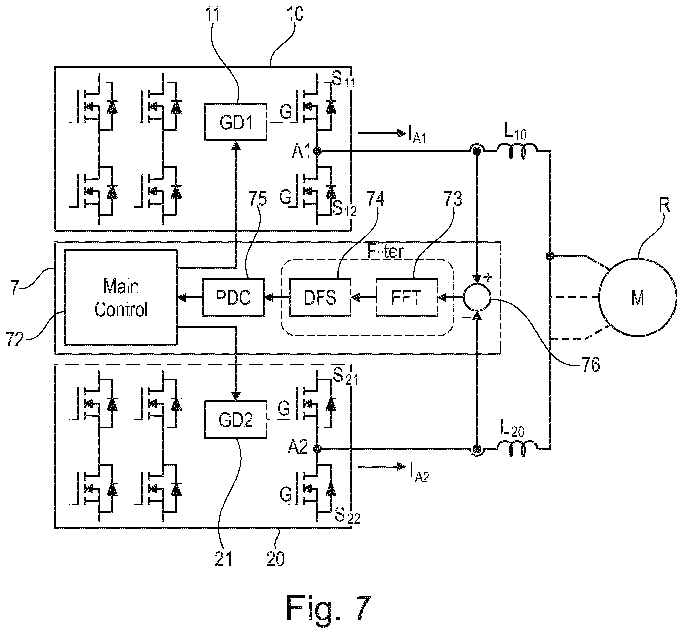

A solution to the problem of overlapping time between the switching actions of the corresponding semiconductor switches is provided for by the circuit of FIG. 7. The solution is based on the realization that the different circulating currents that flow within a parallel-connected inverter system can be divided into the fundamental-frequency and the high-frequency components that may consist of the switching frequency and its harmonics. In particular, the switching frequency of the semiconductor switches represents the fundamental frequency of the circulating currents, as the circulating current occurs at a moment of overlap between the ON states of the semiconductor switches.

Accordingly, a high-frequency circulating current comes into existence due to inter-circuit short circuits that take place at a fixed frequency which depends on the inverter switching frequency such that the inverter switching frequency provides for a specific signature of the circulating current. The high-frequency circulating current is superimposed on the respective phase current (phase current I_{A} in the embodiments of FIGS. 5 and 6) and will appear in the respective output AC phase current. Therefore, it can be separated from the phase current in the frequency domain.

For example, by measuring the first and second phase currents I_{A1} and I_{A2} of phase A, the high-frequency circulating current for that phase can be estimated by subtracting the phase current I_{A1} of converter unit 10 from phase current I_{A2} of converter unit 20. This is implemented in an adder 76. Thereby, the high-frequency circulating current is extracted (without this being necessarily the case). The next step is to extract the frequency component of interest, which is the fundamental frequency of the high-frequency circulating current or a harmonic of that frequency. The frequency component extraction may be implemented in a DSP or an FPGA 73, in the form, e.g., of FFT or wavelet.

Next, the amplitude (referred to as "magnitude" in the following) of the extracted characteristic frequency component of interest needs to be determined, as the magnitude is indicative of the strength of the high-frequency circulating current. The magnitude determination of the characteristic frequency is implemented in a characteristic frequency selector 74. The characteristic frequency selector 74 may comprise a notch filter or bandpass filter in a low-cost hardware realization. In other embodiments, the magnitude determination may be made by a software analysing the frequency domain signal.

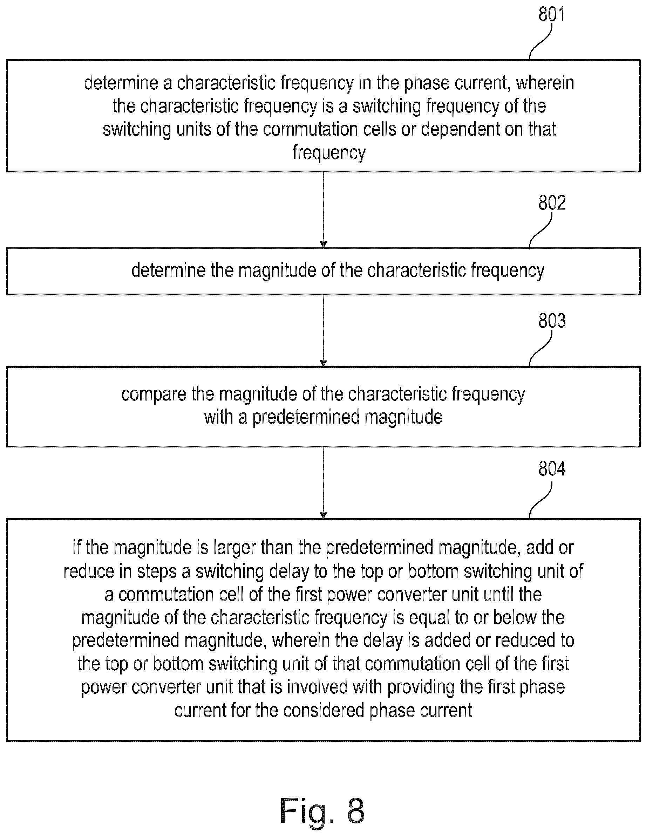

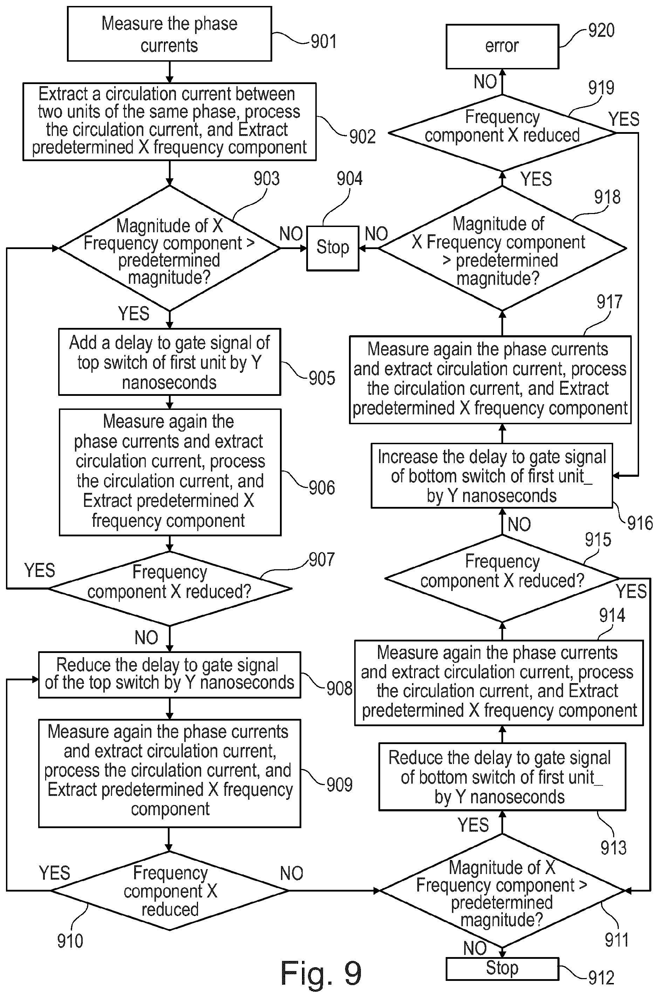

The determined magnitude of the characteristic frequency is input into a propagation delay compensating unit 75. Unit 75 is configured to compare the magnitude of the characteristic frequency with a predetermined magnitude. If the magnitude is greater than the predetermined magnitude, this indicates that the circulation current is stronger than desired, as the magnitude of the frequency component of interest depends on the amplitude of the circulating current. In such case, a switching delay is determined in the manner discussed with respect to FIGS. 8 and 9. The switching delay is provided to the main control 72 of controller 7 (see FIG. 1 in this respect). The main control 72 may be the FPGA 71 of FIG. 1 or be implemented in other manners.

The main control 72 provides shifted control signals to the gate drivers 11, 21 of the converter units 10, 20 in order to provide for a delay compensation such that the circulating current is reduced or altogether eliminated. The aim is to reduce delay Pd in FIG. 4 as much as possible. The respective procedure is next discussed with respect to FIGS. 8 and 9. The general idea is to provide a switching delay to one of the gate drivers 11, 12 while the control signal provided to the other of the gate drivers 12, 11 serves as a reference, and to monitor the change in the magnitude of the characteristic frequency during the manipulation of the switching delay.

It is pointed out that the units 73, 74 and 75 may be part of the controller 7, but alternatively may be part of a separate delay compensating circuit.

According to FIG. 8, a magnitude variation of the characteristic frequency is monitored while manipulating the delay. As illustrated in FIG. 8, a characteristic frequency in the phase current is determined in step 801, wherein the characteristic frequency is a switching frequency of the switching units of the commutation cells or related to that frequency. Such determination may be made in unit 73 of FIG. 7 in that the sum or difference of the phase currents I_{A}, I_{B} is transformed in the frequency domain. Subsequently, in step 802, the magnitude of the characteristic frequency is determined. Such determination may be made by unit 74 of FIG. 7. It is then compared in step 803 the magnitude of the characteristic frequency with a predetermined magnitude, wherein the predetermined magnitude is indicative of a circulating current which is just acceptable.

According to step 804, if the magnitude is larger than the predetermined magnitude (this indicating that the strength of the circulating current is not acceptable), a switching delay is added or reduced in steps to the top or bottom switching unit (such as S11 or S12 in FIG. 2) of the commutation cell of the first power converter unit 10 until the magnitude of the characteristic frequency is equal to or below the predetermined magnitude. The delay is added or reduced to the top or bottom switching unit of that commutation cell of the first power converter unit that is involved with providing the first phase current for the considered phase current.

Accordingly, a delay/overlapped switching can be eliminated by incremental modification of the delay time. The delay time implementation can be incorporated in a DSP or an FPGA 72 where the switching pulses are generated to drive both converter units 10, 20. As the delay can be lagging or leading with respect to a time reference, e.g. one of the converter unit PWM signal reference, it is proposed to follow a trial-and-error method to identify the correct direction. When the delay compensation is no longer improving with the top (or bottom) switch of one of the phases, the delay manipulation is shifted to the other overlapping switching pair by following the same process to identify the correct direction and compensate the delay.

By following this method for all the phases, the circulating current paths due to inter-circuit short circuit can be corrected.

FIG. 9 discusses the method of FIG. 8 with more detail. According to FIG. 9, the method starts in step 901 with measuring the phase currents, which, for example, may be phase currents I_{A1} and I_{A2} of phase A. The circulating current is superimposed on the phase currents. In step 902, the circulation current between the converter units 10, 20 is extracted. To this end, the difference of the phase currents I_{A1} and I_{A2} is formed. In other embodiments, the sum of the phase currents I_{A1} and I_{A2} of considered phase A may be further processed. Further, in step 902, the circulation current is processed and the characteristic frequency (termed "X" in FIG. 9) is determined and is magnitude extracted, as discussed with respect to steps 801 to 803 of FIG. 8.

It is then made a comparison in step 903 if the magnitude of the characteristic frequency X is above a predetermined magnitude. If not, the method stops at 904 as in such case it is not necessary to further reduce the circulation current. If so, a delay is added in step 905 to the gate signal of the top switch of the first converter unit (such as switch S₁₁ in FIG. 5). the delay may have a length of several (Y) nanoseconds. The phase currents are then measured again and the characteristic frequency magnitude is extracted again in step 906. It is then determined in step 907 if the magnitude of the characteristic frequency has been reduced by prior steps 905 and 906. If so, this indicates that the initially added delay has been going in the right direction, and steps 905 and 906 are repeated.

If the characteristic frequency magnitude has not been reduced, a negative delay is added in step 908. The phase currents are then measured again and the characteristic frequency magnitude is extracted again in step 909. It is then determined in step 910 if the magnitude of the characteristic frequency has been reduced by prior steps 908 and 909. If so, this indicates that the reduced delay has been going in the right direction, and steps 908 and 909 are repeated. If the characteristic frequency magnitude has not been reduced in step 910, this indicates that a suitable delay has been found and that the delay compensation is no longer improving with the top switch. This corresponds to the situation that the circulation current CR1₄ in FIG. 5 has been reduced to the optimum.

However, the delay manipulation now needs to be shifted to the other overlapping switching pair, namely, semiconductor switches S21 and S12 to reduce the other circulating current CR2_{A} in FIG. 6. The same procedure as before is to be followed to compensate for that delay. Accordingly, in step 911 it is determined if the magnitude of the characteristic frequency X is larger than the predetermined magnitude. If this is not the case, the method stops at step 912, as in such case it is not necessary to further reduce the circulation current. If so, a delay is reduced (i.e., a negative delay is added) in step 913 to the gate signal of the bottom switch of the first converter unit (such as switch S₁₂ in FIG. 6). The delay may have a length of several (Y) nanoseconds. The phase currents are then measured again and the characteristic frequency magnitude is extracted again in step 914. It is then determined in step 915 if the magnitude of the characteristic frequency has been reduced by prior steps 913 and 914. If so, this indicates that the initially reduced delay has been going in the right direction, and steps 913 and 914 are repeated.

It is pointed out that in step 913, alternatively, the gate signal of the top switch of the second converter unit (such as switch S₂₁ in FIG. 6, and as shown in FIG. 7) could be reduced. Further, it is not relevant if the delay is initially positive or negative.

If the characteristic frequency magnitude has not been reduced, a positive delay is added in step 916 to the bottom switch. The phase currents are then measured again and the characteristic frequency magnitude is extracted again in step 917. It is then determined in step 918 if the magnitude of the characteristic frequency is larger than the predetermined magnitude. If this is not the case, the method ends at step 904, as this indicates that a suitable delay has been found. This corresponds to the situation that the circulation current CR2_{A} in FIG. 6 has been reduced to the optimum. If this is the case in step 918, it is further determined in step 919 if the characteristic frequency magnitude has been reduced by prior steps 916 and 917. If so, this indicates that the added delay has been going in the right direction, and steps 916, 917 and 918 are repeated. If the characteristic frequency magnitude has not been reduced in step 919, this indicates the presence of an error 920 (considering previous step 918).

FIG. 10 is a flowchart of a method that allows to detect a short circuit current and protects the power converter by shutting down one of the converter units in case of an excessive amount of short-circuit current. The method is the same until the magnitude of the characteristic frequency has been determined and compared to a predetermined magnitude, see units 73, 74, 75 of FIG. 7 and steps 801 to 803 in FIG. 8. However, in this embodiment, the predetermined magnitude is chosen to be higher than the other embodiments. If the determined magnitude of the characteristic frequency is larger than the predetermined magnitude, this indicates an excessive amount of high-frequency short-circuit current between the involved converter units 10, 20. As this could lead to overheating and damaging the converters, at least one of the converter units 10, 20 is shut down in such case.

Accordingly, in FIG. 10, steps 101, 102 and 103 corresponds to step 901, 902 and 903 in FIG. 9, wherein the second predetermined magnitude in step 103 is a higher than the predetermined magnitude in step 903.

If the magnitude of the characteristic frequency is above the second predetermined magnitude, a flag error is generated in step 104 to shut down the respective converter unit (converter units 10 or converter unit 20).

In a further embodiment, the sequence of FIG. 10 is implemented as an additional feature of the sequence of FIG. 9. For example, step 903 of FIG. 9 may include to further determine if the magnitude of the characteristic frequency is larger than a second predetermined magnitude and, in such case, generate an error flag in accordance with step 104 of FIG. 10.

It should be understood that the above description is intended for illustrative purposes only, and is not intended to limit the scope of the present disclosure in any way. Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

## Claims

1. A method for reducing a circulating current in a power converter (100), the power converter (100) comprising: a first power converter unit (10) and a second power converter unit (20) arranged in parallel, wherein each power converter unit (10, 20) comprises at least one commutation cell (61-63, 64-66) with a top switching unit (S11, S13, S15, S21, S23, S25) and a bottom switching unit (S12, S14, S16, S22, S24, S26) connected as a half bridge circuit and configured to receive a DC input voltage and provide a single phase current (I_{A1}, I_{A2}), and each phase current (I_{A}, I_{B}, I_{C}) provided by the power converter (100) is the sum of a respective first phase current (I_{A1}) of a commutation cell (61) of the first power converter unit (10) and a respective second phase current (I_{A2}) of a commutation cell (64) of the second power converter unit (20); the method comprising the steps of:
for each phase current (I_{A}, I_{B}, I_{C}) provided by the power converter (100):
determining (801) a characteristic frequency in the phase current (I_{A1}, I_{A2}, I_{A}), wherein the characteristic frequency is a switching frequency of the switching units (S11, S12, S21, S22) of the commutation cells (61, 64) or related to that frequency;
determining (802) the magnitude of the characteristic frequency;
comparing (803) the magnitude of the characteristic frequency with a predetermined magnitude; and
if the magnitude is larger than the predetermined magnitude, adding or reducing (804) in steps a switching delay to the top or bottom switching unit (S11, S12) of a commutation cell (61) of the first power converter unit (10) until the magnitude of the characteristic frequency is equal to or below the predetermined magnitude, wherein the delay is added or reduced to the top or bottom switching unit (S11, S12) of that commutation cell (61) of the first power converter unit (10) that is involved with providing the first phase current (I_{A1}) for the considered phase current (I_{A}).

2. The method of claim 1, wherein determining (801) a characteristic frequency in the phase current comprises adding or subtracting the first and second phase currents (I_{A1}, I_{A2}) for the considered phase current (I_{A}) and determine a characteristic frequency of the added or subtracted first and second phase currents (I_{A1}, I_{A2}).

3. The method of claim 1 or 2, wherein determining (801) a characteristic frequency in the phase current comprises performing a transformation in the frequency domain, wherein determining the magnitude of the characteristic frequency takes place in the frequency domain.

4. The method of claim 3, wherein determining (802) the magnitude of the characteristic frequency comprises applying a characteristic frequency selector (74) to the frequency domain signal, in particular wherein the output of the characteristic frequency selector (74) is provided to a propagation delay compensating unit (75), wherein the propagation delay compensating unit (75) compares the magnitude of the characteristic frequency with the predetermined magnitude and determines the switching delay.

5. The method of any preceding claim, wherein all switching units (S11-S16, S21-S26) are operated by the same modulation signals provided by a single controller (7), wherein the single controller (7) provides pulsed modulation signals with the switching delay to a gate driver (11) which controls operation of the switching units (S11, S12) of the considered commutation cell (61), and wherein the gate driver (11) provides output switching signals (S) with the switching delay.

6. The method of any preceding claim, wherein the method is carried out at a factory site to optimize the timing of the switching signals for the commutation cells, and/or the method is carried out permanently or in intervals during operation of the power converter (100).

7. The method of any preceding claim, wherein the method is carried out for three phases of a three phase alternating current (I_{A}, I_{B}, I_{C}), wherein each power converter unit (10, 20) comprises three commutation cells (61-63; 64-66).

8. The method of any preceding claim, wherein adding or reducing in steps a switching delay to the top or bottom switching unit (S11, S12) of the commutation cell (61) of the first power converter unit (10) until the magnitude of the characteristic frequency is equal to or below the predetermined magnitude comprises:
adding (905) a switching delay to the considered switching unit (S11);
determining (906) again the magnitude of the characteristic frequency;
determining (907) if the magnitude of the characteristic frequency has decreased;
if so, add (905) a further switching delay to the considered switching unit (S11) and repeat the adding (905) of a further switching delay until the magnitude of the characteristic frequency does not decrease anymore;
if not, reduce (908) the switching delay by adding a negative switching delay;
determining (909) again the magnitude of the characteristic frequency;
determining (910) if the magnitude of the characteristic frequency has decreased;
and
if so, adding (908) a further negative switching delay to the considered switching unit (S11) and repeating the adding (908) of a further negative switching delay until the magnitude of the characteristic frequency does not decrease any more.

9. The method of any preceding claim, wherein after the switching delay to the top or bottom switching unit (S11, S12) of the commutation cell (61) of the first power converter (10) has been changed to be equal to or below the predetermined magnitude, a switching delay is added or reduced in steps to the other one (S12, S11) of the top or bottom switching units of the commutation cell (61) of the first power converter (10) or to the top or bottom switching unit (S21, S22) of the commutation cell (64) of the second power converter (20) until the magnitude of the characteristic frequency is equal to or below the predetermined magnitude for that top or bottom switching unit (S12, S11, S21, S22).

10. A method for short-circuit detection in a power converter (100), the power converter (100) comprising: a first power converter unit (10) and a second power converter unit (20) arranged in parallel, wherein each power converter unit (10, 20) comprises at least one commutation cell (61-63, 64-44) with a top switching unit (S11, S13, S15, S21, S23, S25) and a bottom switching unit (S12, S14, S16, S22, S24, S26) connected as a half bridge circuit and configured to receive a DC input voltage and provide a single phase current (I_{A1}, I_{A2}), and each phase current (I_{A}, I_{B}, I_{C}) provided by the power converter (100) is the sum of a respective first phase current (I_{A1}) of a commutation cell (61) of the first power converter unit (10) and a respective second phase current (I_{A2}) of a commutation cell (64) of the second power converter unit (20);
the method comprising the steps of:
for each phase current (I_{A}, I_{B}, I_{C}) provided by the power converter (100):
determining (801) a characteristic frequency in the phase current (I_{A1}, I_{A2}, I_{A}), wherein the characteristic frequency is a switching frequency of the switching units (S11, S12, S21, S22) of the commutation cells (61, 64) or related to that frequency;
determining (802) the magnitude of the characteristic frequency;
comparing (803) the magnitude of the characteristic frequency with a predetermined magnitude; and
if the magnitude is larger than the predetermined magnitude, shutting down (104) operation of at least one of the power converter units (10, 20).

11. A power converter comprising:
a first power converter unit (10) and a second power converter unit (20) arranged in parallel between a positive voltage rail (2) and a negative voltage rail (3) of a DC power bus, wherein each power converter unit (10, 20) comprises at least one commutation cell (61-63, 64-66) with a top switching unit (S11, S13, S15, S21, S23, S25) and a bottom switching unit (S12, S14, S16, S22, S24, S26) connected as a half bridge circuit and configured to receive a DC input voltage and provide a single phase current (I_{A1}, I_{A2});
gate drivers (11, 21), each gate driver (11, 21) associated with one of the power converter units (10, 20) and configured to provide a pulsed output signal (S) for controlling switching of the switching units of the respective power converter unit (10, 20), the pulsed output signal (S) having a switching frequency, wherein each phase current (I_{A}, I_{B}, I_{C}) provided by the power converter (100) is the sum of a respective first phase current (I_{A1}) of a commutation cell (61) of the first power converter unit (10) and a respective second phase current (I_{A2}) of a commutation cell (64) of the second power converter unit (20);
a delay compensating circuit (73, 74, 75) which comprises:
means (73) to determine, for each of the phase currents (I_{A}, I_{B}, I_{C}), a characteristic frequency in the phase current (I_{A}), wherein the characteristic frequency is a switching frequency or related to that frequency; and
means (74) to determine the magnitude of the characteristic frequency; and
means (75) to compare the magnitude of the characteristic frequency with a predetermined magnitude, and determine if the magnitude is larger than the predetermined magnitude; and
a single controller (7) configured to:
provide pulsed control signals to the gate drivers (11, 21), wherein the gate drivers (11, 21) provide pulsed output signals (S) to the switching units (S11-S16, S21-S26) of the respective commutation cell (61-63, 64-66) based on the pulsed control signals received from the single controller (7);
receive the information if the magnitude is larger than the predetermined magnitude; and
if so, add or reduce in steps a switching delay to the pulsed control signals provided to the gate driver (11) of that commutation cell (61, 62) of the first power converter unit (10) that is involved with providing the first phase current (I_{A1}) for the considered phase current (I_{A}), in particular wherein the means (73) to determine a characteristic frequency in the phase current are configured to determine a characteristic frequency in the phase current by adding or subtracting the first and second phase currents for the considered phase current and determine a characteristic frequency of the added or subtracted first and second phase currents.

12. The power converter of claim 11, wherein the means (73) to determine the magnitude of the characteristic frequency are configured to perform a transformation into the frequency domain, wherein determining the magnitude of the characteristic frequency takes place in the frequency domain.

13. The power converter of claim 12, wherein the means to compare the magnitude of the characteristic frequency with the predetermined magnitude comprise a characteristic frequency selector (74) which is configured to determine the magnitude of the characteristic frequency in the frequency domain, in particular wherein the means to compare the magnitude of the characteristic frequency with a predetermined magnitude, and determine if the magnitude is larger than a predetermined magnitude, comprise a propagation delay compensating unit (75) which is configured to receive from the characteristic frequency selector (74) information about the magnitude of the characteristic frequency, to compare the magnitude of the characteristic frequency with the predetermined magnitude, and determine the switching delay based on the comparison.

14. The power converter of any one of claims 11 to 13, wherein the delay compensating circuit (73, 74, 75) is integrated into the single controller (7), and/or wherein the single controller (7) is further configured to, after the switching delay to the top or bottom switching unit (11, 12) of the commutation cell (61) of the first power converter (10) has been changed to be equal to or below the predetermined magnitude, add or reduce a switching delay in steps to the other one (S12, S11) of the top or bottom switching units of the commutation cell (61) of the first power converter (10) or to the top or bottom switching unit (S21, S22) of the commutation cell (64) of the second power converter (20) until the magnitude of the characteristic frequency is equal to or below the predetermined magnitude for that top or bottom switching unit (S12, S11, S21, S22).

15. A power converter comprising:
a first power converter unit (10) and a second power converter unit (20) arranged in parallel between a positive voltage rail (2) and a negative voltage rail (3) of a DC power bus, wherein each power converter unit (10, 20) comprises at least one commutation cell (61-63, 64-66) with a top switching unit (S11, S13, S15, S21, S23, S25) and a bottom switching unit (S12, S14, S16, S22, S24, S26) connected as a half bridge circuit and configured to receive a DC input voltage and provide a single phase current (I_{A1}, I_{A2});
gate drivers (11, 21), each gate driver (11, 21) associated with one of the power converter units (10, 20) and configured to provide a pulsed output signal (S) for controlling switching of the switching units of the respective power converter unit (10, 20), the pulsed output signal (S) having a switching frequency, wherein each phase current (I_{A}, I_{B}, I_{C}) provided by the power converter (100) is the sum of a respective first phase current (I_{A1}) of a commutation cell (61) of the first power converter unit (10) and a respective second phase current (I_{A2}) of a commutation cell (64) of the second power converter unit (20);
a delay compensating circuit (73, 74, 75) which comprises:
means (73) to determine, for each of the phase currents (I_{A}, I_{B}, I_{C}), a characteristic frequency in the phase current (I_{A}), wherein the characteristic frequency is a switching frequency or related to that frequency;
means (74) to determine the magnitude of the characteristic frequency; and
means (75) to compare the magnitude of the characteristic frequency with a predetermined magnitude, and determine if the magnitude is larger than the predetermined magnitude; and
a single controller (7) configured to:
provide pulsed control signals to the gate drivers (11, 21), wherein the gate drivers (11, 21) provide pulsed output signals (S) to the switching units (S11-S16, S21-S26) of the respective commutation cell (61-63, 64-66) based on the pulsed control signals received from the single controller (7);
receive the information if the magnitude is larger than the predetermined magnitude; and
if so, shut down (104) operation of at least one of the gate drivers (11, 21).
